Europäisches Patentamt

European Patent Office

Office européen des brevets

(11) Publication number: **0 284 058**
**A2**

## EUROPEAN PATENT APPLICATION

(21) Application number: **88104719.5**

(22) Date of filing: **24.03.88**

(51) Int. Cl.⁴: **B29C 67/12**

(30) Priority: **25.03.87 JP 72157/87**
**25.03.87 JP 72158/87**
**25.03.87 JP 72159/87**
**05.11.87 JP 279680/87**

(43) Date of publication of application:
**28.09.88 Bulletin 88/39**

(84) Designated Contracting States:
**DE FR GB**

(71) Applicant: **KANEGAFUCHI KAGAKU KOGYO KABUSHIKI KAISHA**
**2-4 Nakanoshima 3-chome**
**Kita-ku Osaka-shi Osaka-fu(JP)**

(72) Inventor: **Fujita, Tamio**
**6-17, Takaoka 2-chome Ohkubo-cho**
**Akashi-shi Hyogo-ken(JP)**
Inventor: **Tachibana, Hiromitu**
**9-3-209 Jikoji-cho**
**Takasago-shi Hyogo-ken(JP)**

(74) Representative: **Türk, Gille, Hrabal**
**Bruckner Strasse 20**
**D-4000 Düsseldorf 13(DE)**

(54) **Wood-like molded articles and a method for making the same.**

(57) A wood-like molded article rich in the feeling of real wood. The article is manufactured by molding 100 parts by weight of a thermoplastic synthetic resin and 10-400 parts by weight of a pulverized plant fiber to give a molded article and then decorating the molded article with a colorant and/or paint for wood without grinding or after grinding the surface of the article. The feeling of real wood is enhanced when the molded surface is provided with an embossed pattern of wood grain.

EP 0 284 058 A2

# WOOD-LIKE MOLDED ARTICLES AND A METHOD FOR MAKING THE SAME

## BACKGROUND OF THE INVENTION

### 1. Field of the Invention

The present invention relates to wood-like molded articles decorated in a way suitable for use as a decorating material for furniture, craftwork, building, and so forth, as well as for the interior of a vehicle, and a method for making the articles.

### 2. Description of the Prior Art

As wood-like molded articles there have hitherto been known those produced by directly printing a molded article of thermoplastic synthetic resins, thermosetting synthetic resins or the like, by transferring a pattern of wood grain by a process called hot stamping, by laminating a paper or plastic film printed with a wood grain pattern over the molded article, or by finishing the molded surface in an embossed pattern of wood grain, followed by painting. Decorating by any of these methods is, however, planar or one-dimensional, lacking in the warmth, softness and natural feeling of wood.

## SUMMARY OF THE INVENTION

An object of the present invention is to provide a wood-like molded article which is delicate, and has a feeling of depth, warmth and feeling of real wood.

Another object of the invention is to provide a wood-like molded article excellent in heat resistance (thermal deformation resistance).

The above objects can be accomplished by decorating with a colorant and/or paint for wood a molded article of 100 parts by weight of a thermoplastic synthetic resin and 10-400 parts by weight of a pulverized plant fiber.

## DETAILED DESCRIPTION OF THE INVENTION

The present invention, in one aspect, relates to a molded article of 100 parts by weight of a thermoplastic synthetic resin and 10-400 parts by weight of a pulverized plant fiber, decorated by the use of a colorant and/or paint for wood, which features the delicate feeling of depth, warmth and touch of real wood. The present invention, in another aspect, relates to a method for manufacturing a wood-like molded article which comprises molding a mixture of 100 parts by weight of a thermoplastic synthetic resin and 10-400 parts by weight of a pulverized plant fiber to obtain a molded article and decorating the molded article with a colorant and/or paint for wood.

There are no particular limitations concerning the thermoplastic synthetic resins useful in the present invention but suitable are, among others, polyvinyl chloride resins, chlorinated polyvinyl chloride resins and styrene copolymer resins. These may be used either alone or in combinations of two or more.

The polyvinyl chloride resins useful in the present invention include polyvinyl chloride and copolymers of vinyl chloride with monomers copolymerizable therewith such as ethylene, propylene, vinyl acetate, and allyl chloride. The mean polymerization degree according to JIS K6721 of the polyvinyl chloride useful in the present invention is 300-5,000, preferably 400-2,000. If the mean polymerization degree is less than 300, the mechanical strength of the molded articles is inferior, while a market lowering of processability results if the degree is in excess of 5,000. There are no particular limitations concerning the methods of manufacturing the polyvinyl chloride resins, and those polymerized by such methods as emulsion polymerization, suspension polymerization and bulk polymerization are all suitable.

The chlorinated polyvinyl chloride resins useful in the present invention include chlorinated polyvinyl chloride resins obtained by after-chlorinated of polyvinyl chloride and vinyl chloride copolymers. The polymerization degree of the chlorinated polyvinyl chloride resins useful in the present invention is 300-3,000, preferably 400-1,500. The chlorine content of the chlorinated polyvinyl chloride resins is 57 weight % or more, preferably 62-68 weight %. If the polymerization degree is less than 300, the mechanical strength of the resultant molded article is insufficient, while the processability of the chlorinated polyvinyl chloride resins is markedly lowered if the degree of polymerization is in excess of 3,000. Also, if the chlorine content is less than 57 %, no improvement in heat resistance can be obtained.

The sytrene copolymers useful in the present invention consist of 100-30 weight % of a copolymer (A) comprised 15-90 weight % of an aromatic vinyl compound, 0-40 weight % of an unsaturated nitrile compound and/or 0-60 weight % of a methacrylate or acrylate, and further 0-20 weight % of other copolymerizable monomers, and 0-70 weight % of a graft copolymer (B) in which one or more of the aforesaid monomers are graft-polymerized to a polybutadiene or butadiene copolymer whose butadiene content is 50 weight % or more. As the aromatic vinyl compounds which are components of the aforesaid styrene copolymer resins, styrene and substituted styrenes such as $\alpha$-methylstyrene, vinyl toluene, dimethylstyrene and chlorostyrene can be used. As the unsaturated nitrile compounds, acrylonitrile, methacrylonitrile, etc. can be used. As the methacrylates, methyl metyacrylate, ethyl methacrylate, butyl methacrylate, octyl methacrylate, etc. can be used, while as the acrylates, methyl acrylate, ethyl acrylate, butyl acrylate, octyl acrylate, etc. can be used. Regarding the graft copolymers (B) used in the present invention, the polybutadiene or the butadiene copolymers whose butadiene content is 50 weight % or more can be substituted with other elastomers such as nitrile butadiene rubbers, ethylene propylene diene terpolymers, ethylene-vinylacetate copolymers, chlorinated polyethylenes, acrylic rubbers, polyurethane rubbers and styrene-butadiene-styrene block polymer rubbers. The copolymer (A) or the graft copolymer (B) may also be used in combinations of two or more.

The sytrene copolymer resins useful in the present invention are as mentioned above, but preferred are those containing 20-90 weight % of $\alpha$-methylstyrene. This is because articles molded of an $\alpha$-methylstyrene-containing resin are resistant to thermal deformation and hence the field of their application is large. If the content of $\alpha$-methylstyrene is less than 20 weight %, the thermal behaviour improving effect is less noticeable, while, if the content is in excess of 90 weight %, the compatibility with polyvinyl chloride resins becomes worse, if, for example, the styrene copolymer resins are mixed with polyvinyl chloride resins, as will be stated below.

A mixture of two or more of the aforesaid thermoplastic synthetic resins can be used in the present invention. For example, a mixture consisting of 5-90 parts by weight of a styrene copolymer resin and 95-10 parts by weight of a polyvinyl chloride resin may be mentioned. When the content of the styrene copolymer resin is less than 5 parts by weight and that of the polyvinyl chloride resin is in excess of 95 parts by weight, the processability of the mixture is inferior and, especially, good molded articles are difficult to obtain when the content of the pulverized plant fiber is high. Meanwhile, when, the content of the styrene copolymer resin is in excess of 90 parts by weight and that of the polyvinyl chloride resin is less than 10 parts by weight, the resistance to chemicals of the molded articles is inferior. In the above case, when the content of the pulverized plant fiber is less than 10 parts by weight, molded articles having a satisfactory feeling of wood cannot be obtained.

The pulverized plant fibers useful in the present invention include pulverized wood, bamboo, husks, shells, pulp and other plant-including materials. The mean particle size is 2000-20 µm, preferably 700-60 µm. If the mean particle size is less than 20 µm, the effect is insufficient, while the appearance of the molded articles is unseemly if the size is in excess of 2,000 µm. Among such pulverized plant fibers, those bleached, degreased, colored, admixed with chemicals such as a neutralizing agent or treated with chemicals can be used, and such materials can be used either alone or in combinations of two or more.

The amount added of such pulverized plant fibers used in the molded article is 10-400 parts by weight per 100 parts by weight of the thermoplastic synthetic resin. If the content of pulverized plant fiber is less than 10 parts by weight, molded articles having a satisfactory feeling of wood are not obtained, while, if the content is in excess of 400 parts by weight, the mechanical strength required for retention of the shape of the molded article is not attainable and processability becomes extremely poor.

The resins used in the present invention may be further admixed, if and as necessary, with stabilizers, lubricants, anti-oxidants, antistatic agents, colorants, flame retardants, plasticizers, inorganic fillers, metal powders, processing aids, reforming agents and the like generally used in molding.

As preferred inorganic fillers and metal powders, there are carbonates such as $CaCO_3$, $MgCO_3$ and $BaCO_3$; oxides such as CaO, MgO, BaO, $Al_2O_3$, $TiO_2$ and ZnO; hydroxides such as $Ca(OH)_2$, $Mg(OH)_2$, Ba-$(OH)_2$ and $Al(OH)_3$; sulfates such as $CuSO_4$, $MgSO_4$, $BaSO_4$; talc, clay, mica, copper powder, aluminum powder, lead powder, stainless steel powder, iron powder and the like, and the preferred amount added is 0-200 parts by weight per 100 parts by weight of the thermoplastic synthetic resin. If the amount is in excess of 200 weight parts, the processability becomes inferior, the mechanical strength of the molded article is lowered and its appearance becomes unseemly.

As preferred processing aids and reformers, there are included polymethyl methacrylate resins and methyl methacrylate copolymer resins in which the methyl methacrylate content is 60 weight % or more and in which the comonomers are one or more monomers copolymerizable with methyl methacrylate such as methyl acrylate, ethyl acrylate, butyl acrylate, propyl acrylate, hexyl acrylate, octyl acrylate, decyl acrylate, ethyl methacrylate, butyl methacrylate, octyl methacrylate, decyl methacrylate, dodecyl methacrylate, lauryl methacrylate, aromatic vinyl compounds and unsaturated nitrile compounds, ethylene vinyl acetate copolymer resins, ethylene-vinyl acetate-vinyl chloride terpolymer resins, chlorinated polyethylene resins, nitrile butadiene rubbers, polyurethanes, and the like.

Molded articles of the present invention include pipes, sheets, films, profiles, etc. manufactured by known molding methods for thermoplastic resins such as extrusion, injection, calendering, compression, stamping and transferring. In the present invention it is preferred to grind the surface of the molded article a depth of 0.005-2.0 mm, preferably 0.01-0.5 mm.

This is because grinding improves the effect of coloring or painting. Grinding facilitates especially the penetration of a colorant into the molded article, providing an improved feeling of real wood. The molded articles can be ground in known ways such as shot blasting, brush sanding, belt sanding, disc sanding and the like. When a belt sander is used, the particle size of the abrasive of the sander is #30-400 according to JIS R6001, preferably #60-240.

In the present invention, molded articles with embossed surfaces are preferred. This is because embossing improves the effect of coloring and painting, at the same time providing an improved feeling of real wood. It is particularly preferred to emboss the surface of the molded article after grinding because embossing after grinding further enhances the real wood feeling.

As methods of embossing the surface of the molded article, pressing the surface with a roll, plate or mold whose surfaces are embossed, injecting a molding compound into a mold whose inner surface is embossed and the like can be used. There are no limitations with respect to the material of such embossing rolls, plates or molds, and any known material such as metals, ceramics and resins may be used.

Decoration with a colorant and/or paint for wood (wood stain) in the present invention means coating the molded article with a colorant and/or paint for wood. In the present invention, colorants or paints can be used alone, but it is preferred to use them in combination for a richer variation of decorating effects.

The colorants and paints used for molded articles in the present invention include fillers and sealers. The colorants used in the present invention include any of the known colorants for wood such as aqueous colorants (water base stains), oily colorants (oil stains), non grain raising stains and pigment stains. As fillers, any of the known fillers for wood such as aqueous fillers, oily fillers and synthetic resin fillers can be used. Further, as paints and sealers, any of the known paints and sealers for wood such as nitrocellulose lacquer, aminoalkyd resins, polyester resins, urethane resins, acrylic resins, urea resins, vinyl chloride resins and shellac varnish can be used. The colorants or the paints may also be used in combinations of two or more.

In the present invention, the molded articles can be coated with the colorants and/or paints for wood by known methods, such as spraying, brushing, dipping or by the use of a cloth. Instead of tinting with colorants for wood, any of the known wood-printing methods such as relief-printing, gravure printing, screen printing and pad printing may be used. If necessary, after coating the molded articles with colorants and/or paints for wood, the excessive colorants and/or paints may be wiped off the surface of the molded articles by the use of a brush, waste cloth or the like, or, the surface may be further finished by dry grinding, wet grinding, compound grinding, buffing or the like.

Hereinafter the present invention is further explained in greater detail by way of examples and control examples, but, needless to say, the present invention is in no way limited thereby.


Examples 1-6, Control Examples 1-5

3.0 parts by weight of tribasic lead sulfate, 0.5 parts by weight of lead stearate, 1.0 part by weight of calcium stearate, 3.0 parts by weight of DOP, 3.0 parts by weight of a processing aid (KANE ACE PA-20, trademark, copolymer of methyl methacrylate and butyl acrylate, manufacturer: Kanegafuchi Chemical Industry Co., Ltd.) were added to 100 parts by weight of polyvinyl chloride resin having a mean polymerization degree of 650 together with pulverized wood of needle-leaf tree (spruce) having a means particle size of 100 μm and calcium carbonate (WHITON SB, trademark, manufacturer: Shiraishi Industry Co., Ltd.) according to the formulations shown in Table 1. The whole was then mixed for 20 minutes in a ribbon blender whose jacket temperature was 110°C. This blended material was charged into a pressure type kneader whose jacket temperature was 120°C and, after kneading for 15 minutes therein, the

4

compound was compression molded for 10 minutes at a mold temperature of 170°C and under a pressure of 80 kg/cm², and thus molded articles which were 5 mm thick, 150 mm long and 150 mm wide with flat surfaces were obtained. Then the molded articles were heated to 170°C without grinding or after grinding the surface a depth of 0.5 mm by a belt sander with a #100 sand cloth, and an embossed pattern of wood grain was given to the top surface of the molded articles by a compression molding machine with a mold which had a reverse pattern.

On these molded articles having an embossed pattern of wood grain, coloring tests by the use of certain colorants for wood were conducted and the feel of surface texture was evaluated by touching the articles.

Coloring test (1) (Oily colorant):

The side with an embossed pattern of wood grain of the molded articles was coated by brushing with an oily colorant for wood (OIL STAIN Mahoganybrown; trademark, manufacturer: Nippon Paint Co., Ltd.), excessive colorant was lightly wiped off with a waste cloth and the colorability was visually evaluated.

Coloring test (2) (Aqueous colorant):

The side with an embossed pattern of wood grain of the molded article was coated by brushing with an aqueous colorant for wood (PORE STAIN, trademark, manufacturer: Washin Chemical Industry Co., Ltd.), excessive colorant was lightly wiped off with waste cloth and the colorability was visually evaluated. The evaluation is made according to the following criteria;

◎ : Coloring uniform all over

Δ : Coloring in a somewhat pale shade

X : Coloring hardly recognizable

Evaluation of feel of surface texture;

Comparing the molded article with Japanese oak ground with a #100 sander as a control, the side with an embossed pattern of wood grain was touched by a bare hand and the feel was evaluated. The evaluation was made according to the following criteria;

◎ : Feeling of real wood almost equal to the control

Δ : Slight coolness, somewhat lacking in feeling of real wood

X : No feeling of real wood, lacking in warmth and softness

As seen in Table 1, Examples 1-6 of the present invention are all good in colorability with oily as well as aqueous colorants, the molded articles being good in the feel of surface texture. Examples 2, 4 and 6 in which the surface of the molded article was finished by grinding were rated especially high in colorability and feeling of real wood.

Meanwhile, Control Examples 1-4 were all inferior in colorability and were also rated low in the feel of texture of the molded surface. Control Example 5 lacked mechanical strength to such a degree that the shape of the molded article could not be retained.

Examples 7-12, Control Examples 6-10

5.0 parts by weight of tribasic lead sulfate, 0.5 parts by weight of lead stearate, 1.0 part by weight of calcium stearate, 1.0 part by weight of epoxy soybean oil and 3 parts by weight of a processing aid (KANE ACE PA-20, trademark, copolymer of methyl methacrylate and butyl acrylate, manufacturer: Kanegafuchi Chemical Industry Co., Ltd.) were added to 100 parts by weight of chlorinated polyvinyl chloride resin having a chlorine content of 65 weight % and a mean polymerization degree of 750 together with pulverized wood of a needle-leaf tree (spruce) having a mean particle size of 100 μm and calcium carbonate (WHITON SB, trademark, manufacturer: Shiraishi Industry Co., Ltd.) according to the formulations shown in Table 2. The whole was mixed for 20 minutes in a ribbon blender whose jacket temperature was 110°C. The mixed material was then charged into a pressure type kneader whose jacket temperature was 120°C and, after kneading for 15 minutes therein, the compound was compression molded for 10 minutes at a mold temperature of 180°C and under a pressure of 80 kg/cm². Molded articles which were 5 mm thick, 150 mm long and 150 mm wide with flat surfaces were obtained. Then, the molded articles were heated to 175°C without grinding or after grinding the surface a depth of 0.5 mm by a belt sander with a #100 sand cloth, and an embossed pattern of wooden grain was given to the top surface of the molded articles by a compression molding machine with a mold which had a reverse pattern.

On these molded articles having an embossed pattern of wood grain, coloring tests were conducted using colorants for wood and the feel of surface texture was evaluated by touching the articles.

As seen in Table 2, Examples 7-12 were all good in colorability with aqueous as well as oily colorants and the feel of surface texture of the molded articles was satisfactory. Examples 8, 10 and 12 in which the surface of the molded article was finished by grinding were rated especially high in colorability and feeling of wood.

Meanwhile, Control Examples 5-9 were all inferior in colorability and were also rated low in the feel of texture of the molded surface. Control Example 10 lacked mechanical strength to such a degree that the shape of the molded article could not be retained.

Examples 13-18, Control Examples 11-15

1.0 part by weight of 2,6-di-tert-butyl-4-methyl phenol and 0.5 parts by weight of magnesium sterarate were added to 100 parts by weight of an ABS resin consisting of 21 weight % of acrylonitrile, 58 weight % of styrene and 21 weight % of polybutadiene together with pulverized wood of a needle-leaf tree (spruce) having a mean particle size of 100 μm and calcium carbonate (WHITON SB, trademark, manufacturer: Shiraishi Industry Co., Ltd.) according to the formulations shown in Table 3, and the whole was mixed for 20 minutes in a ribbon blender whose jacket temperature was 110°C. This blended material was charged into a pressure type kneader whose jacket temperature was 120°C and after kneading for 15 minutes therein, the compound was compression molded for 10 minutes under a pressure of 80 kg/cm², and thus molded articles which were 5 mm thick, 150 mm long and 150 mm wide with flat surfaces were obtained. Then molded articles were heated to 160°C without grinding or after grinding the surface a depth of 0.5 mm by a belt sander with a #100 sand cloth, and an embossed pattern of wood grain was given to the top surface of the molded articles by a compression molding machine with a mold which had a reverse pattern.

On these molded articles having an embossed pattern of wood grain, coloring tests by the use of colorants for wood were conducted and the feel of surface texture was evaluated by touching the articles.

As seen in Table 3, Examples 13-18 of the present invention were all good in colorability with oily as well as aqueous colorants, the molded articles being good in the feel of surface texture. Examples 14, 16 and 18 in which the surface of the molded article was finished by grinding were rated especially high in colorability and feeling of wood.

Meanwhile, Control Examples 11-14 were all inferior in colorability and were also rated low in the feel of texture of the molded surface. Control Example 5 lacked mechanical strength to such a degree that the shape of the molded article could not be retained.

Examples 19-44, Control Examples 16-25

3.0 parts by weight of tribasic lead stearate, 0.5 parts by weight of lead stearate, 1.0 part by weight of calcium stearate and 3 parts by weight of a processing aid (KANE ACE PA-20, trademark, copolymer of methyl methacrylate and butyl acrylate, manufacturer: Kanegafuchi Chemical Industry Co., Ltd.) were added to 100 parts by weight of a mixture of polyvinyl chloride resin with a mean polymerization degree of 650 and various styrene copolymer resins shown in Table 4 together with pulverized wood of needle-leaf tree (spruce) having a mean particle size of 100 μm and calcium carbonate (WHITON SB, trademark, manufacturer: Shiraishi Industry Co., Ltd.) according to the formulations shown in Table 5 and Table 6, and the whole was mixed for 20 minutes in a ribbon blender whose jacket termperature was 110 °C. This blended material was charged into a pressure type kneader whose jacket temperature was 120°C and after kneading for 15 minutes therein, the compound was compression molded for 5 minutes at a mold temperature of 160°C and under a pressure of 80 kg/cm², and thus molded articles which were 5 mm thick, 150 mm long and 150 mm wide with flat surfaces were obtained. On these molded articles, heat resistance was measured according to JIS K7206 (Vicat softening point with 5 kg-load). Then the molded articles were heated to 160 °C without grinding or after grinding the surface a depth of 0.3 mm by a belt sander with a #100 sand cloth, and an embossed pattern of wooded grain was given to the top surface of the molded

0 284 058

articles by a compression molding machine with a mold which had a reverse pattern.

On these molded articles having an embossed pattern of wood grain, coloring tests by the use of colorants for wood were conducted and the feel of surface texture was evaluated by touching the articles. The results were as shown in Table 5 and Table 6.

As seen in Table 5, Examples 19-30 of the present invention were all good in colorability with oily as well as aqueous colorants, the molded articles being good in the feel of surface texture. Examples 20, 22, 24, 26, 28 and 30 in which the surface of the molded article was finished by grinding were rated high in colorability and feeling of real wood. Also, as seen in Table 6, Examples 31-44 in which an α-methylstyrene-containing resin was used were very excellent in heat resistance, colorability and feel of texture of the molded surface.

Meanwhile, Control Examples 16-23 were inferior in colorability, feel of surface texture and heat resistance. Control Examples 24-25 lacked mechanical strength to such a degree that the shape of the molded articles could not be retained.

As described above, the present invention provides synthetic resin molded articles which are good in colorability and the feel of surface texture inherent in real wood and which are excellent in heat resistance.

## Table 1

| | Control Example | | | | Example | | | | | | Control Example |
|---|---|---|---|---|---|---|---|---|---|---|---|
| | **1** | **2** | **3** | **4** | **1** | **2** | **3** | **4** | **5** | **6** | **5** |
| Pulverized wood (parts by weight) | 0 | | 5 | | 50 | | 100 | | 300 | | 600 |
| Calcium carbonate (parts by weight) | 0 | | 50 | | 50 | | 0 | | 0 | | 0 |
| Appearance of molded article | Good | | Good | | Good | | Good | | Good | | Bad (crack) |
| Sander-grinding (with : O) (without : X) | ✕ | ◯ | ✕ | ◯ | ✕ | ◯ | ✕ | ◯ | ✕ | ◯ | Test infeasible due to cracking |
| Colorability by coloring test(1) | ✕ | ✕ | ✕ | ✕ | △ | ◎ | △ | ◎ | △ | ◎ | --ditto-- |
| Colorability by coloring test(2) | ✕ | ✕ | ✕ | ✕ | △ | ◎ | △ | ◎ | △ | ◎ | --ditto-- |
| Feel of surface texture | ✕ | ✕ | ✕ | ✕ | △ | ◎ | △ | ◎ | △ | ◎ | --ditto-- |

# Table 2

| | Control Example | | | | Example | | | | | | Control Example |
|---|---|---|---|---|---|---|---|---|---|---|---|
| | 6 | 7 | 8 | 9 | 7 | 8 | 9 | 10 | 11 | 12 | 10 |
| Pulverized wood (parts by weight) | 0 | | 5 | | 5 0 | | 1 0 0 | | 3 0 0 | | 6 0 0 |
| Calcium carbonate (parts by weight) | 0 | | 5 0 | | 5 0 | | 0 | | 0 | | 0 |
| Appearance of molded article | Good | | Good | | Good | | Good | | Good | | Bad (crack) |
| Sander-grinding (with : O) (without : X) | × | ⊙ | × | ⊙ | × | ○ | × | ⊙ | × | ○ | Test infeasible due to cracking |
| Colorability by coloring test(1) | × | × | × | × | △ | ◉ | △ | ◉ | △ | ◎ | ---ditto--- |
| Colorability by coloring test(2) | × | × | × | × | △ | ◉ | △ | ◉ | △ | ◎ | ---ditto--- |
| Feel of surface texture | × | × | × | × | △ | ◉ | △ | ◉ | △ | ◎ | ---ditto--- |

0 284 058

## Table 3

| | Control Example | | | | Example | | | | | | Control Example |
|---|---|---|---|---|---|---|---|---|---|---|---|
| | 11 | 12 | 13 | 14 | 13 | 14 | 15 | 16 | 17 | 18 | 15 |
| Pulverized wood (parts by weight) | 0 | | | 5 | 5 0 | | 1 0 0 | | 3 0 0 | | 6 0 0 |
| Calcium carbonate (parts by weight) | 0 | | 5 0 | | 5 0 | | 0 | | 0 | | 0 |
| Appearance of molded article | Good | | Good | | Good | | Good | | Good | | Bad (crack) |
| Sander-grinding (with : O) (without : X) | × | ⊙ | × | ⊙ | × | ○ | × | ○ | × | ○ | Test infeasible due to cracking |
| Colorability by coloring test(1) | × | × | × | × | △ | ◎ | △ | ◎ | △ | ◎ | ---ditto--- |
| Colorability by coloring test(2) | × | × | × | × | △ | ◎ | △ | ◎ | △ | ◎ | ---ditto--- |
| Feel of surface texture | × | × | × | × | △ | ◎ | △ | ◎ | △ | ◎ | ---ditto--- |

## Table 4

| | A | B | C | D |
|---|---|---|---|---|
| α - methylstyrene (wt.%) | 0 | 2 3 | 4 5 | 6 1 |
| Styrene (wt.%) | 5 8 | 3 8 | 1 6 | 4 |
| Acrylonitrile (wt.%) | 2 1 | 2 1 | 2 1 | 2 8 |
| Polybutadiene (wt.%) | 2 1 | 1 8 | 1 8 | 7 |

<p style="text-align:center"><strong><u>Table 5</u></strong></p>

| | | Control Examples | | | | | | | | Examples | | | | | | | | | | | | Control Examples | |
|---|---|---|---|---|---|---|---|---|---|---|---|---|---|---|---|---|---|---|---|---|---|---|---|---|
| | | 16 | 17 | 18 | 19 | 20 | 21 | 22 | 23 | 19 | 20 | 21 | 22 | 23 | 24 | 25 | 26 | 27 | 28 | 29 | 30 | 24 | 25 |
| Styrene copolymer resin | Kind | — | | — | | A | | — | | A | | A | | A | | A | | A | | A | | — | A |
| | parts by weight | 0 | | 0 | | 50 | | 0 | | 20 | | 50 | | 80 | | 50 | | 50 | | 50 | | 0 | 50 |
| Polyvinyl chloride resin (parts by weight) | | 100 | | 100 | | 50 | | 100 | | 80 | | 50 | | 20 | | 50 | | 50 | | 50 | | 100 | 50 |
| Pulverized wood (parts by weight) | | 5 | | 5 | | 5 | | 20 | | 50 | | 50 | | 50 | | 50 | | 100 | | 300 | | 600 | 600 |
| $CaCO_3$ (parts by weight) | | 0 | | 50 | | 0 | | 0 | | 0 | | 0 | | 0 | | 50 | | 0 | | 0 | | 0 | 0 |
| Appearance of molded article | | Good | | Good | | Good | | Good | | Good | | Good | | Good | | Good | | Good | | Good | | Bad (crack) | Bad (crack) |
| Vicat softening point (°C) | | 85 | | 87 | | 92 | | 89 | | 97 | | 100 | | 103 | | 105 | | 107 | | 125 | | Immeasurable due to cracking | Immeasurable due to cracking |
| Sander-grinding (with : O) (without : X) | | × | O | × | O | × | O | × | O | × | O | × | O | × | O | × | O | × | O | × | O | Test infeasible due to cracking | Test infeasible due to cracking |
| Colorability by coloring test(1) | | × | × | × | × | × | × | Δ | ◎ | Δ | ● | Δ | ● | Δ | ● | Δ | ◎ | Δ | ◎ | Δ | ◎ | —ditto— | —ditto— |
| Colorability by coloring test(2) | | × | × | × | × | × | × | Δ | ◎ | Δ | ● | Δ | ● | Δ | ● | Δ | ◎ | Δ | ◎ | Δ | ◎ | —ditto— | —ditto— |
| Feel of surface texture | | × | × | × | × | × | × | Δ | ◎ | Δ | ● | Δ | ● | Δ | ● | Δ | ● | Δ | ◎ | Δ | ◎ | —ditto— | —ditto— |

Table 6

| | | Examples | | | | | | | | | | | | | |
|---|---|---|---|---|---|---|---|---|---|---|---|---|---|---|---|
| | | 31 | 32 | 33 | 34 | 35 | 36 | 37 | 38 | 39 | 40 | 41 | 42 | 43 | 44 |
| Styrene copolymer resin | Kind | B | | B | | C | | C | | C | | D | | D | |
| | parts by weight | 5 0 | | 8 0 | | 5 0 | | 5 0 | | 8 0 | | 5 0 | | 8 0 | |
| Polyvinyl chloride resin (parts by weight) | | 5 0 | | 2 0 | | 5 0 | | 5 0 | | 2 0 | | 5.0 | | 2 0 | |
| Pulverized wood (parts by weight) | | 5 0 | | 5 0 | | 5 0 | | 5 0 | | 5 0 | | 5 0 | | 5 0 | |
| CaCO₃ (parts by weight) | | 0 | | 0 | | 0 | | 5 0 | | 0 | | 0 | | 0 | |
| Appearance of molded article | | Good | | Good | | Good | | Good | | Good | | Good | | Good | |
| Vicat softening point (°C) | | 1 0 3 | | 1 1 0 | | 1 0 9 | | 1 1 1 | | 1 1 9 | | 1 1 6 | | 1 2 9 | |
| Sander-grinding (with : O) (without : X) | | X | O | X | O | X | O | X | O | X | O | X | O | X | O |
| Colorability by coloring test(1) | | △ | ◎ | △ | ● | △ | ◎ | △ | ◎ | △ | ◎ | △ | ◎ | △ | ◎ |
| Colorability by coloring test(2) | | △ | ◎ | △ | ● | △ | ◎ | △ | ◎ | △ | ◎ | △ | ◎ | △ | ◎ |
| Feel of surface texture | | △ | ◎ | △ | ● | △ | ◎ | △ | ◎ | △ | ◎ | △ | ◎ | △ | ◎ |

0 284 058

**Claims**

1. A wood-like molded article comprising a molded admixture of 100 parts by weight of a thermoplastic synthetic resin and 10-400 parts by weight of a pulverized plant fiber, said molded article being colored with a colorant and/or paint for wood.

2. A wood-like molded article of Claim 1, wherein said thermoplastic synthetic resin is a polyvinyl chloride resin.

3. A wood-like molded article of Claim 1, wherein said thermoplastic synthetic resin is a polyvinyl chlorinated vinyl chloride resin.

4. A wood-like molded article of Claim 1, wherein said thermoplastic synthetic resin is a styrene copolymer resin.

5. A wood-like molded article of Claim 1, wherein said thermoplastic synthetic resin is a mixture of 5-90 parts by weight of a styrene copolymer resin and 95-10 parts by weight of a polyvinyl chloride resin.

6. A wood-like molded article of Claim 4 or 5, wherein said styrene copolymer resin contains 20-90 weight % of $\alpha$-methylstyrene.

7. A wood-like molded article of Claim 1, wherein a surface of the article is provided with an embossed pattern.

8. A wood-like molded article of Claim 7, wherein said embossed pattern is a pattern of wood grain.

9. A method for manufacturing a wood-like molded article which comprises molding a mixture of 100 parts by weight of a thermoplastic synthetic resin and 10-400 parts by weight of a pulverized plant fiber to obtain a molded article and coloring the molded article with a colorant and/or paint for wood.

10. A method of Claim 9, wherein said thermoplastic synthetic resin is a polyvinyl chloride resin.

11. A method of Claim 9, wherein said thermoplastic synthetic resin is a chlorinated polyvinyl chloride resin.

12. A method of Claim 9, wherein said thermoplastic synthetic resin is a styrene copolymer resin.

13. A method of Claim 9, wherein said thermoplastic synthetic resin is a mixture of 5-90 parts by weight of a styrene copolymer resin and 95-10 parts by weight of a polyvinyl chloride resin.

14. A method of Claim 12 or 13, wherein said styrene copolymer resin contains 20-90 weight % of $\alpha$-methylstyrene.

15. A method of Claim 9, further comprising embossing the surface of said molded article with an embossed pattern.

16. A method of Claim 9, further comprising grinding the surface of said molded article a depth of 0.005-2.0 mm before coloring.

17. A method of Claim 16, comprising embossing the surface of said molded article with an embossed pattern after grinding.

18. A method of Claim 15 or 17, wherein said embossed pattern is a pattern of wood grain.